# EUROPÄISCHE PATENTSCHRIFT

(11) **EP 4 364 222 B1**
(45) Veröffentlichungstag und Bekanntmachung des Hinweises auf die Patenterteilung: **28.05.2025**
(21) Anmeldenummer: 22738369.2
(22) Anmeldetag: 21.06.2022
(51) Int. Cl.: H01M 8/04089, B01D 45/14, H01M 8/04119, H01M 8/04291

(54) **VERFAHREN ZUR KONTINUIERLICHEN AUFBEREITUNG VON MEHRPHASIGEN FLUIDSTRÖMEN**
METHOD FOR THE CONTINUOUS PREPARATION OF MULTIPHASE FLUID FLOWS
PROCÉDÉ DE TRAITEMENT EN CONTINU DE FLUX DE FLUIDES POLYPHASIQUES

(30) Priorität: 01.07.2021 DE 102021116943
(43) Veröffentlichungstag der Anmeldung: 08.05.2024
(73) Patentinhaber: Hengst SE, 48147 Münster (DE)
(72) Erfinder: HASSEL, Florian, 45721 Haltern am See (DE); DIEKJAKOBS, Mathias, 48565 Steinfurt (DE); STITTERICH, Eike, 48308 Senden (DE); RÖLVER, Martin, 48329 Havixbeck (DE)
(74) Vertreter: Pelster Behrends Patentanwälte PartG mbB
(86) Internationale Anmeldenummer: PCT/EP2022/066888
(87) Internationale Veröffentlichungsnummer: WO 2023/274787

(56) Entgegenhaltungen:
- EP-A1- 3 189 882
- DE-A1- 102016 124 098
- DE-A1- 102017 215 739
- DE-A1- 102017 221 309
- DE-A1- 102019 219 992
- DE-U1- 20 302 824
- DE-U1- 202015 105 000
- GB-A- 2 337 473

## Beschreibung

Die Erfindung betrifft ein Verfahren zur kontinuierlichen Aufbereitung von mehrphasigen Fluidströmen, einen rotierenden Abscheider für den Einsatz in einem entsprechenden Verfahren und ein Brennstoffzellensystem zur Durchführung des entsprechenden Verfahrens. Offenbart wird zudem eine Verwendung entsprechender rotierender Abscheider bei der kontinuierlichen Aufbereitung von mehrphasigen Fluidströmen.

Der Gegenstand der Erfindung ist in den beigefügten Ansprüchen definiert.

Der Einsatz von Brennstoffzellen im Bereich der Fahrzeugtechnik gilt seit einigen Jahren als vielversprechende Möglichkeit, die Abhängigkeit von fossilen Rohstoffen wie Erdöl zu reduzieren. Die Brennstoffzelle stellt dabei eine der wichtigsten Alternativen zum Einsatz von Batterien, wie beispielsweise Lithium-Ionen-Batterien, dar. Gegenüber der Batterietechnologie weist die Brennstoffzellentechnologie dabei spezifische Vorteile auf, insbesondere hinsichtlich der praktischen Handhabung des Brennstoffes, des Speicherpotentials und der Nachfüllzeiten sowie der potentiellen Möglichkeit, die bestehende Leitungs- und Speicherinfrastruktur zu verwenden.

In Brennstoffzellen erfolgt die Umsetzung von Sauerstoff mit einem Brennstoff, beispielsweise Wasserstoff, Methan oder Methanol, zu Wasser und ggf. anderen Reaktionsprodukten unter kontrollierten Reaktionsbedingungen, wobei die Reaktionsschritte der Redoxreaktion räumlich getrennt ablaufen. Die Brennstoffzelle besteht hierzu aus einer Anode und einer Kathode, die durch einen Elektrolyten, beispielsweise eine Elektrolytmembran, voneinander getrennt sind.

Die Reaktanten werden der Brennstoffzelle im Betrieb kontinuierlich zugeführt, wobei der Brennstoff zumeist überstöchiometrisch eingesetzt wird. Dadurch ist für den reibungslosen Betrieb einer Brennstoffzelle ein ausgefeiltes System für die Fluidleitung notwendig. Um einen möglichst effizienten Betrieb der Brennstoffzelle zu gewährleisten und eine hohe Ausnutzung der eingesetzten Materialien zu gewährleisten, ist es dabei insbesondere notwendig, die aus der Brennstoffzelle austretenden Fluidströme, insbesondere den überstöchiometrisch eingesetzten Brennstoff, zumindest teilweise in die Brennstoffzelle zu rezirkulieren. Dies ist jedoch in der Praxis mit erheblichen Problemen verbunden, insbesondere, weil die aus der Brennstoffzelle austretenden Fluidströme regelmäßig das Reaktionsprodukt der chemischen Umsetzung, zumeist Wasser, umfassen, welches zumindest teilweise in kondensierter Form vorliegt. Beim Rezirkulieren der austretenden Betriebsgase gilt es zumeist zu vermeiden, dass auch das in der Brennstoffzelle erzeugte und größtenteils kondensierte Wasser in die Brennstoffzelle zurückgeführt wird, wo es andernfalls beispielsweise zu einer ungewollten Flutung des Brennstoffzellen-Stacks kommen könnte.

Aus diesem Grund wird in dem zum Rezirkulieren verwendeten Fluidleitungssystem, bzw. zumindest in dem mit der Anode eingesetzten Fluidleitungssystem, häufig ein Wasserabscheider eingesetzt.

Im Stand der Technik kommen hierfür passive Wasserabscheider zum Einsatz. Diese Systeme können nach Einschätzung der Erfinder jedoch mit erheblichen Nachteilen verbunden sein. Beispielsweise können sie zu ungewollten Staudrücken bzw. Druckabfällen im Fluidleitungssystem führen. Insbesondere wenn die Brennstoffzelle mit niedriger Last betrieben wird und der aus dem Brennstoffzellen-Stack austretende Fluidstrom somit vergleichsweise schwach ist, weisen solche Systeme zudem schlechte Abscheidegrade bezogen auf das auskondensierte Wasser auf. Grundsätzlich wird die Abscheideleistung der aus dem Stand der Technik bekannten passiven Systeme regelmäßig als unzureichend empfunden.

Weitere Informationen zum allgemeinen technischen Hintergrund sind beispielsweise in der DE 102016124098 A1, der EP 3189882 A1, der GB 2 337473 A, der DE 2020151050000 U1, der DE 20302824, der DE 102017215739 A1, der DE 102017221309 A1 und der DE 102019219992 A1 offenbart.

Die Erfinder der vorliegenden Erfindung haben nun erkannt, dass die aus dem Stand der Technik bekannten Probleme durch den Einsatz eines rotierenden Abscheiders gelöst werden können, insbesondere wenn dieser beispielsweise durch einen separaten Elektromotor angetrieben wird und somit nicht nur mit einer ausgezeichneten Abscheideleistung kondensierte Nebenprodukte aus dem Fluidstrom entfernt, sondern, quasi nach Art einer Turbine, durch seine Rotation auch aktiv eine ausreichende Strömung im Fluidleitungssystem sicherstellt.

Der grundsätzlich vorteilhafte Einsatz von rotierenden Abscheidern zur kontinuierlichen Aufbereitung von mehrphasigen Fluidströmen kann nach Erkenntnis der Erfinder aber auch mit Nachteilen verbunden sein, die für bestimmte Anwendungen, insbesondere beim Einsatz in dem Fluidleitungssystem in einer Brennstoffzelle, als unvorteilhaft angesehen werden können. Bei diesem an sich überaus vorteilhaften Aufbau sind nämlich in eigenen Experimenten der Erfinder vereinzelt überraschende, unvorhergesehene Effekte aufgetreten, die zu ungewollten Leistungseinbußen der Brennstoffzelle führten.

Ohne an diese Theorie gebunden sein zu wollen, nehmen die Erfinder der vorliegenden Erfindung an, dass diese Leistungseinbußen der Brennstoffzelle eine Folge der besonderen Leistungsfähigkeit des rotierenden Abscheiders sein könnten, die insbesondere auftreten können, wenn der rotierende Abscheider mit besonders hoher Drehzahl bzw. Abscheideleistung betrieben wird. In diesem Fall kann die Wasserabscheidung durch den leistungsfähigen rotierenden Abscheider derart gut funktionieren, dass auch der Stoffmengenanteil des Wassers in der aus dem rotierenden Abscheider austretenden Gasphase stark absinkt. Gleichzeitig wird das nunmehr sehr trockene Trägergas der Brennstoffzelle durch den rotierenden Abscheider auch bei niedriger Last mit ausreichendem Druck zur Verfügung gestellt und durch die Brennstoffzelle zirkuliert. Für den reibungslosen Betrieb einer Brennstoffzelle ist es jedoch häufig nötig, dass die zur Trennung der Elektroden eingesetzte Elektrolytmembran feucht gehalten wird, um einen ausreichenden Ionentransport zu ermöglichen. Ohne an diese Theorie gebunden sein zu wollen, gehen die Erfinder der vorliegenden Erfindung davon aus, dass der an sich vorteilhafte Einsatz eines rotierenden Abscheiders in einer Brennstoffzelle, insbesondere in dem mit der Anode verbundenen Fluidleitungssystem, gegenüber herkömmlichen Abscheidern die Gefahr erhöht, dass die Elektrolytmembran keine ausreichende Membranfeuchtigkeit aufweist.

Die Aufgabe der vorliegenden Erfindung bestand darin, die vorstehend beschriebene Problematik zu beheben und für die an sich überaus vorteilhafte und innovative Ausgestaltung des Einsatzes eines rotierenden Abscheiders in einem Brennstoffzellensystem ein Verfahren anzugeben, welches für die kontinuierliche Aufbereitung von mehrphasigen Fluidströmen, insbesondere beim Betrieb von Brennstoffzellen, besonders geeignet ist und dadurch die vorstehend beschriebenen Nachteile vermeidet sowie einen effizienten Betrieb der Brennstoffzelle ermöglicht.

Durch das anzugebende Verfahren zur kontinuierlichen Aufbereitung von mehrphasigen Fluidströmen, insbesondere beim Betrieb von Brennstoffzellen, sollte es ermöglicht werden, auch beim Einsatz eines rotierenden Abscheiders einen aufbereiteten Fluidstrom zu erhalten, mit welchem ein ungewolltes Austrocknen der Elektrolytmembran unterbunden werden kann.

Die Erfinder der vorliegenden Erfindung haben nunmehr erkannt, dass zur Lösung der vorstehend beschriebenen Aufgaben ein Verfahren zur kontinuierlichen Aufbereitung von mehrphasigen Fluidströmen so ausgestaltet werden muss, dass beim an sich vorteilhaften Einsatz des rotierenden Abscheiders der Stoffmengenanteil des Prozessstoffs in der aufbereiteten Gasphase nicht um mehr als 50 % gegenüber der ursprünglichen Gasphase reduziert wird.

Die vorstehend genannten Aufgaben werden entsprechend durch Verfahren zur kontinuierlichen Aufbereitung von mehrphasigen Fluidströmen, wie sie in den Ansprüchen definiert sind, bzw. durch rotierende Abscheider und Verwendungen, wie sie nachfolgend offenbart sind, gelöst. Bevorzugte erfindungsgemäße Ausgestaltungen ergeben sich aus den Unteransprüchen und den nachfolgenden Ausführungen.

Solche Merkmale erfindungsgemäßer Gegenstände, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit ein oder mehreren weiteren Merkmalen kombiniert wird, die in irgendeinem Ausmaß als bevorzugt bezeichnet werden. Merkmale bevorzugter rotierender Abscheider und Verwendungen ergeben sich aus den Merkmalen bevorzugter Verfahren.

Die Erfindung betrifft ein Verfahren zur kontinuierlichen Aufbereitung von mehrphasigen Fluidströmen beim Betrieb von Brennstoffzellen, umfassend die Schritte:
a) Bereitstellen eines mehrphasigen Fluidstroms umfassend eine gasförmige Phase und eine flüssige Phase, wobei die gasförmige Phase einen Trägerstoff und einen Prozessstoff umfasst, wobei die flüssige Phase den Prozessstoff umfasst, wobei es sich bei dem Prozessstoff um Wasser handelt,
b) Einbringen des mehrphasigen Fluidstroms in einen kontinuierlich betreibbaren rotierenden Abscheider, wobei der rotierende Abscheider bevorzugt kontinuierlich oder in Intervallen, besonders bevorzugt kontinuierlich, betrieben wird,
c) Zumindest teilweises Abtrennen der flüssigen Phase aus dem mehrphasigen Fluidstrom mittels des rotierenden Abscheiders zum Erzeugen eines aufbereiteten Fluidstroms umfassend eine aufbereitete Gasphase, wobei 98 Gew.-% oder mehr der flüssigen Phase abgetrennt werden,
wobei die aufbereitete Gasphase den Trägerstoff und den Prozessstoff umfasst, wobei der Stoffmengenanteil des Prozessstoffes in der aufbereiteten Gasphase 50 % oder mehr des Stoffmengenanteils des Prozessstoffes in der gasförmigen Phase des mehrphasigen Fluidstroms beträgt.

Das erfindungsgemäße Verfahren ist vorgesehen für den Einsatz beim Betrieb von Brennstoffzellen, insbesondere Polymerelektrolyt-Brennstoffzellen, d.h. Brennstoffzellen, die als Elektrolyt eine Polymermembran einsetzen. Hierbei ist der Einsatz des erfindungsgemäßen Verfahrens im anodenseitigen Fluidleitungssystem der Brennstoffzelle bevorzugt.

Die Erfinder der vorliegenden Erfindung sind jedoch zu der Einschätzung gelangt, dass die bei der Optimierung für die Brennstoffzelle gesammelten Erkenntnisse zur kontinuierlichen Aufbereitung von mehrphasigen Fluidströmen unter Verwendung eines rotierenden Abscheiders grundsätzlich auch für andere, nicht erfindungsgemäße Anwendungsbereiche relevant sind, die eine sorgsame Steuerung der Prozessstoffkonzentration in einer Gasphase erfordern, weil beispielsweise nachgelagerte Vorrichtungen und Elemente ein bestimmtes Mindestmaß an Prozessstoff benötigen.

In Schritt a) des erfindungsgemäßen Verfahrens wird ein mehrphasiger Fluidstrom bereitgestellt, der eine gasförmige und eine flüssige Phase umfasst. Ein entsprechender mehrphasiger Fluidstrom kann beispielsweise in einer Brennstoffzelle gebildet werden, in der durch die Redoxreaktion Wasser gebildet wird, welches in kondensierter Form zusammen mit dem überschüssigen Brennstoff aus der Brennstoffzelle geführt wird.

Aus der Sicht der Erfinder ist es zwar grundsätzlich möglich, dass der mehrphasige Fluidstrom bei bestimmten Anwendungen auch eine feste Phase, beispielsweise partikuläre Verunreinigungen, umfasst, dies ist jedoch für die meisten Anwendungen weniger bevorzugt und sollte insbesondere beim Betrieb von Brennstoffzellen prinzipiell eher vermieden werden. In jedem Fall kann es als Vorteil des erfindungsgemäßen Verfahrens angesehen werden, dass ggf. vorhandene partikuläre Verunreinigungen im Fluidstrom durch den Einsatz eines rotierenden Abscheiders automatisch und gründlich abgetrennt werden können.

Der erfindungsgemäß bereitzustellende mehrphasige Fluidstrom umfasst in der flüssigen Phase einen Prozessstoff. Im Rahmen der vorliegenden Erfindung ist dieser Prozessstoff die Verbindung, deren Konzentration im erfindungsgemäßen Verfahren sorgsam gesteuert werden muss. Erfindungsgemäß, insbesondere beim bevorzugten Einsatz des erfindungsgemäßen Verfahrens in einer Polymerelektrolyt-Brennstoffzellen, wird es sich bei dem Prozessstoff um Wasser handeln.

Neben der flüssigen Phase liegt der Prozessstoff auch in der gasförmigen Phase vor, wobei sich regelmäßig, in Abhängigkeit von der Temperatur und dem herrschenden Druck, ein Phasengleichgewicht zwischen dem Prozessstoff in der gasförmigen und der flüssigen Phase einstellen wird bzw. wobei das mehrphasige System diesem Zustand zumindest entgegenstreben wird.

Die gasförmige Phase umfasst neben dem gasförmigen Prozessstoff zudem noch den Trägerstoff. Vereinfacht gesprochen bezeichnet der Ausdruck Trägerstoff dabei sämtliche gasförmigen Bestandteile, bei denen es sich nicht um den Prozessstoff handelt. Der Trägerstoff dient im erfindungsgemäßen Verfahren vor allen Dingen dazu, ein ausreichendes Gasvolumen bereitzustellen und einen Transport des Prozessstoffes in flüssiger und gasförmiger Form durch ein Fluidleitungssystem zu ermöglichen. In der Praxis, insbesondere bei der erfindungsgemäßen Anwendung in Brennstoffzellen, wird es sich bei dem Trägerstoff zumeist um den überstöchiometrisch zugeführten Brennstoff bzw. ein den Brennstoff enthaltendes Gemisch handeln, beispielsweise in Kombination mit Stickstoff.

In Übereinstimmung mit den vorstehenden Ausführungen wird der bereitgestellte mehrphasige Fluidstrom in Schritt b) des erfindungsgemäßen Verfahrens in einen kontinuierlich betreibbaren rotierenden Abscheider eingebracht. Kontinuierlich betreibbare rotierende Abscheider sind dem Fachmann aus anderen Anwendungsfelder grundsätzlich bekannt und unterscheiden sich von anderen rotierenden Abscheidern, die nicht kontinuierlich betrieben werden können, beispielsweise von Zentrifugen. Als rotierende Abscheider bezeichnet der Fachmann solche Abscheider, die über ein oder mehrere Elemente verfügen, deren Rotation eine Abscheidewirkung bedingt oder befördert.

Mittels dieses rotierenden Abscheiders wird die flüssige Phase, d. h. die Phase, welche den flüssigen Prozessstoff umfasst, in Schritt c) aus dem mehrphasigen Fluidstrom zumindest teilweise abgetrennt, wobei eine weitgehende Abtrennung von 98 Gew.-% oder mehr der flüssigen Phase, bevorzugt 99 Gew.-% oder mehr der flüssigen Phase, erfindungsgemäß ist.

Durch diesen Arbeitsschritt c) wird ein aufbereiteter Fluidstrom erhalten, der zumindest eine aufbereitete Gasphase umfasst. Im Lichte der vorstehenden Ausführungen ist verständlich, dass dieser aufbereitete Fluidstrom potentiell eine flüssige und eine gasförmige Phase umfassen kann, sodass auch der aufbereitete Fluidstrom ein mehrphasiges System sein kann, was in einigen Fällen sogar besonders bevorzugt sein kann, wie es nachfolgend offenbart wird.

Wichtig für das erfindungsgemäße Verfahren ist nunmehr, dass die aufbereitete Gasphase nicht nur den Trägerstoff, sondern auch den Prozessstoff umfasst, d.h. den Prozessstoff in gasförmiger Form. Hierbei ist es nach Einschätzung der Erfinder essentiell, dass der Stoffmengenanteil des Prozessstoffes in der aufbereiteten Gasphase, d. h. der Gasphase des aufbereiteten Fluidstroms, wie er aus dem kontinuierlich betreibbaren rotierenden Abscheider austritt, trotz der Leistungsfähigkeit des rotierenden Abscheiders nicht zu stark reduziert wird, wobei eine Halbierung des Stoffmengenanteils des Prozessstoffes in der gasförmigen Phase gegenüber dem Stoffmengenanteil des gleichen Prozessstoffes in der gasförmigen Phase des mehrphasigen Fluidstroms als sinnvoller Grenzwert identifiziert werden konnte, mit dem insbesondere beim Betrieb von Polymerelektrolyt-Brennstoffzellen über einen weiteren Parameterbereich hinweg und bei verschiedensten Betriebsbedingungen ausgezeichnete Leistungen erreicht werden konnten.

Es hat sich als besonders vorteilhaft erwiesen, das erfindungsgemäße Verfahren so zu betreiben, dass möglichst kleine Unterschiede in der relativen Zusammensetzung der aufbereiteten Gasphase gegenüber der gasförmigen Phase des mehrphasigen Fluidstroms eingestellt werden. Hiermit lassen sich insbesondere solche Brennstoffzellen, welche mit niedriger Last betrieben werden und bei denen vergleichsweise wenig Wasser erzeugt wird, auch über längere Zeiträume zuverlässig betreiben, wobei der Fluidstrom im Fluidleitungssystem durch den rotierenden Abscheider mit dem nötigen Druck bereitgestellt werden kann. Bevorzugt ist daher ein erfindungsgemäßes Verfahren, wobei der Stoffmengenanteil des Prozessstoffes in der aufbereiteten Gasphase 80 % oder mehr, bevorzugt 90 % oder mehr, besonders bevorzugt 95 % oder mehr, ganz besonders bevorzugt 95 bis 105 %, des Stoffmengenanteils des Prozessstoffes in der gasförmigen Phase des mehrphasigen Fluidstroms beträgt.

Diese Relation zwischen der Zusammensetzung der Gasphase vor und nach dem rotierenden Abscheider lässt sich in Übereinstimmung mit dem fachmännischen Verständnis auch über das Verhältnis der Partialdrücke zwischen dem Trägerstoff und dem Prozessstoff ausdrücken. Alternativ ist somit ein erfindungsgemäßes Verfahren, wobei sich das Verhältnis des Partialdrucks des Prozessstoffes zum Partialdruck des Trägerstoffes von der gasförmigen Phase des mehrphasigen Fluidstroms zu der aufbereiteten Gasphase um 50 % oder weniger verringert. Bevorzugt ist analog ein erfindungsgemäßes Verfahren, wobei sich das Verhältnis des Partialdrucks des Prozessstoffes zum Partialdruck des Trägerstoffes von der gasförmigen Phase des mehrphasigen Fluidstroms zu der aufbereiteten Gasphase um 20 % oder weniger, bevorzugt 10 % oder weniger, besonders bevorzugt 5 % oder weniger, ganz besonders bevorzugt im Wesentlichen gar nicht, verringert.

Für die Bestimmung der Stoffmengenänderung des Prozessstoffes in der Gasphase vor und hinter dem rotierenden Abscheider kann der Fachmann auf gebräuchliche Bestimmungsmethoden zurückgreifen, von denen er eine geeignete Bestimmungsmethode in Abhängigkeit von den Verfahrensparametern wählt, insbesondere in Abhängigkeit vom Prozessstoff. Für organische Prozessstoffe kann der Fachmann beispielsweise Proben entnehmen und gaschromatographisch untersuchen. Für den erfindungsgemäßen Fall von Wasser als Prozessstoff kann die Bestimmung beispielsweise mit einem üblichen Hygrometer erfolgen, wobei in bevorzugten Ausgestaltungen ein Hygrometer jeweils vor und hinter dem rotierenden Abscheider platziert werden kann. Je nach der gewählten Messmethode, ist es zielführend auch den Gesamtdruck der Gasphase zu bestimmen, um bspw. den Partialdruck des Prozessstoffes zu berechnen.

In Übereinstimmung mit dem fachmännischen Verständnis erfolgt die Bestimmung der Stoffmengenanteile bzw. der Partialdrücke unter den Verfahrensbedingungen, d.h. bei der Temperatur und dem Druck, die beim Betrieb des erfindungsgemäßen Verfahrens herrschen.

Die Stoffmengenanteile bzw. die Partialdrücke sind in jedem Moment klar definiert und selbst nicht von der Messmethode abhängig, die lediglich die Genauigkeit der Bestimmung beeinflusst. Der Fachmann ist also frei in der Wahl der verwendeten Messmethode, insbesondere wenn die ermittelte Änderung so weit von dem definierten Grenzwert entfernt liegt, dass dieser auch unter Berücksichtigung des Messfehlers nicht erreicht wird. Der Fachmann wird in üblicher Weise nur dann auf eine genauere Messmethode zurückgreifen müssen, wenn der Abstand zum definierten Grenzwert in der Größe der Messunsicherheit liegt.

Die Erfinder der vorliegenden Erfindung haben verschiedene Optionen identifiziert, mit denen sich die im erfindungsgemäßen Verfahren einzustellende maximale Änderung des Stoffmengenanteils des Prozessstoffes in der Gasphase sowie die bevorzugten Werte für diese Änderung realisieren lassen. Nach Einschätzung der Erfinder der vorliegenden Erfindung geht es insbesondere darum, im rotierenden Abscheider eine Kondensation des in der Gasphase enthaltenen Prozessstoffes, durch die der Stoffmengenanteil dieses Prozessstoffes in der Gasphase reduziert würde, durch geeignete konstruktive und verfahrenstechnische Maßnahmen zu verhindern oder zumindest in ihrem Ausmaß zu reduzieren. Dies stellt eine besondere Herausforderung dar, da der rotierende Abscheider die flüssige Phase des mehrphasigen Fluidstroms zumindest teilweise aus dem Gleichgewicht entfernt, wodurch eine Kondensation begünstigt wird.

In den aus dem Stand der Technik bekannten Verfahren abseits der Brennstoffzelle, die unter Verwendung eines rotierenden Abscheiders betrieben werden, ist diese Problematik kaum relevant, da in diesen Anwendungsfällen zumeist ohnehin bevorzugt ist, wenn der kondensierte Prozessstoff möglichst vollständig mit den übrigen zu entfernenden Teilen abgeschieden werden kann.

Die von den Erfindern der vorliegenden Erfindung identifizierten Optionen zur Steuerung der Partialdruckveränderung, die nachfolgend angegeben sind, können nach Einschätzung der Erfinder der vorliegenden Erfindung vom Fachmann in geeigneter Weise ausgewählt und kombiniert werden, sodass ein Verfahren erhalten wird, welches mit dem vom Fachmann eingesetzten Aufbau kompatibel ist. Aus Sicht der Erfinder hat es sich als besonders vorteilhaft erwiesen, zwei oder mehr, bevorzugt drei oder mehr, besonders bevorzugt vier oder mehr der nachfolgend beschriebenen Optionen zu kombinieren, wobei ganz besonders bevorzugt sämtliche der nachfolgend beschriebenen Optionen zum Einsatz kommen.

Viele der im Stand der Technik eingesetzten rotierenden Abscheider, die darauf ausgerichtet sind, einen Gasstrom möglichst vollständig aufzureinigen, weisen Elemente auf, die der physikalisch-chemischen Bindung von Wasser dienen, beispielsweise Trocknungsmittel oder Kältetrockner. Nach Einschätzung der Erfinder sollte der im erfindungsgemäßen Verfahren einzusetzende rotierende Abscheider aber keine dieser Elemente umfassen. Bevorzugt ist somit ein erfindungsgemäßes Verfahren, wobei der rotierende Abscheider keine Mittel zum Entfernen des gasförmigen Prozessstoffes aus der Gasphase, insbesondere durch chemische Bindung und/oder Adsorption des Prozessstoffes, umfasst. Diese Ausgestaltung hat auch den Vorteil, dass entsprechende rotierende Abscheider weniger wartungsintensiv sind und die Notwendigkeit entfällt, das Trockenmittel von Zeit zu Zeit auszutauschen.

Über den Verzicht auf spezifische Vorrichtungen zur Trocknung der Gasphase hinaus, haben die Erfinder der vorliegenden Erfindung eine besonders effiziente Art der Einflussnahme auf die Stoffmengenänderung identifiziert. Grundsätzlich wäre es intuitiv wünschenswert, die flüssige Phase im mehrphasigen Fluidstrom möglichst weitgehend abzutrennen, um somit einen möglichst niedrigen Massenanteil der flüssigen Phase in dem aufbereiteten Fluidstrom von 1 % oder weniger, bevorzugt 0,5 % oder weniger, besonders bevorzugt 0,1 % oder weniger, einzustellen, was für bestimmte Anwendungen auch bevorzugt sein kann.

Die Erfinder der vorliegenden Erfindung haben jedoch erkannt, dass eine ungewollte Auskondensation des gasförmigen Prozessstoffs aus der Gasphase besonders effizient vermieden werden kann, wenn die flüssige Phase, trotz der potentiell hohen Leistungsfähigkeit des rotierenden Abscheiders, nicht vollständig aus dem Fluidstrom entfernt wird, sodass auch der aufbereitete Fluidstrom noch Reste der flüssigen Phase umfasst, die mit der Gasphase im Gleichgewicht stehen. Die Einstellung dieser Verfahrensführung ist vorteilhafterweise besonders einfach möglich, nämlich durch die gezielte Steuerung der Leistung des rotierenden Abscheiders bzw. dessen inhärenter Abscheidewirksamkeit für Wasser. Hierbei hat es sich als besonders zielführend erwiesen, wenn der verbliebene Anteil an kondensiertem Prozessstoff in der flüssigen Phase in Form von kleinen Teilchen mit einer mittleren Tröpfchengröße von 1 µm oder weniger vorliegt.

Die Erfinder der vorliegenden Erfindung haben für den beschriebenen Zielkonflikt zwischen einer möglichst weitgehenden Abscheidung und einem Verbleib von flüssiger Phase zur Gewährleistung einer möglichst geringen Änderung des Stoffmengenanteils des Prozessstoffes besonders geeignete Bereiche identifiziert, mit denen das erfindungsgemäße Verfahren besonders vorteilhaft zu betreiben ist, insbesondere im Betrieb einer Polymerelektrolyt-Brennstoffzellen. Bevorzugt ist nämlich ein erfindungsgemäßes Verfahren, wobei das Abtrennen in Schritt c) so erfolgt, dass der aufbereitete Fluidstrom die flüssige Phase in einem Massenanteil von 0,05 bis 2 %, bevorzugt 0,1 bis 1 %, besonders bevorzugt 0,2 bis 0,5 % umfasst, bezogen auf die Masse des aufbereiteten Fluidstroms.

Im Zuge der Überlegungen, wie sich das ungewollte Ausscheiden des Prozessstoffes aus der Gasphase unterbinden lässt, haben die Erfinder der vorliegenden Erfindung erkannt, dass vorteilhafterweise die Temperatur des rotierenden Abscheiders eingestellt werden kann, um das Ausmaß der ungewollten Kondensation im rotierenden Abscheider zu verringern. In Übereinstimmung mit dem fachmännischen Verständnis ist hierbei die Temperatur der Innenwände der Arbeitskammer relevant, d. h. des Raumes, durch den mehrphasige Fluidstrom geführt wird. Insbesondere in Kombination mit einer gezielten Leistungssteuerung zur Einstellung eines Restgehalts an flüssiger Phase hat sich dieses Vorgehen als ausgezeichnete Lösung erwiesen, um einen aufbereiteten Fluidstrom bereitzustellen, welcher beispielsweise in einer Brennstoffzelle mit Polymerelektrolytmembran einen langfristigen fehlerfreien Betrieb ermöglicht. Hierbei ist es mit Blick auf eine leichtere Handhabung möglich, den rotierenden Abscheider außen mit einer thermischen Isolation zu verkleiden, was für viele Anwendungen bevorzugt ist. Besonders bevorzugt ist es, den rotierenden Abscheider mit einer Heizvorrichtung auszurüsten, sodass die Temperatur des rotierenden Abscheiders im Verfahren gesteuert werden kann. Bevorzugt ist ein somit erfindungsgemäßes Verfahren, wobei der rotierende Abscheider an den Innenwänden der Arbeitskammer eine Temperatur von 60 °C oder mehr, bevorzugt 70 °C oder mehr, besonders bevorzugt 80 °C oder mehr, aufweist.

Insbesondere in Kombination mit einem temperierten rotierenden Abscheider und/oder beim Einsatz von erwärmten Fluidströmen hat es sich zudem als vorteilhaft erwiesen, im rotierenden Abscheider ein Reservoir des flüssigen Prozessstoffes vorzusehen, dessen Gasraum mit der Arbeitskammer in fluidleitender Verbindung steht. Hierdurch ist es möglich, über die bevorzugt temperierte Flüssigkeit im Reservoir eine zusätzliche Sättigung der Gasphase mit dem Prozessstoff zu ermöglichen, die einer ungewollten Kondensation entgegenwirkt. Vorteilhafterweise kann dieses Reservoir unmittelbar aus der abgetrennten flüssigen Phase gespeist werden. Diese Ausführungsform hat sich auch deshalb als besonders vorteilhaft erwiesen, weil sie es ermöglicht, ein Mindestmaß der Sättigung der Gasphase mit dem Prozessstoff zu ermöglichen.

Eine weitere Option zur Steuerung der Änderung des Stoffmengenanteils des Prozessstoffs in der gasförmigen Phase besteht nach Ansicht der Erfinder in der geeigneten Auswahl der Art des rotierenden Abscheiders, da mit einer spezifischen Auswahl an rotierenden Abscheidern, aufgrund deren generellen Funktionsprinzips, leichter übermäßig starke Änderung im Stoffmengenanteil des Prozessstoffs vermieden werden können, bzw. sich die Verfahrensparameter besonders leicht anpassen lassen, um einer zu starken Änderung entgegenzuwirken. Bevorzugt ist insoweit ein erfindungsgemäßes Verfahren, wobei der rotierende Abscheider eine Strömungsmaschine, ein rotierender Filter, ein rotierender Kanalabscheider oder ein Tellerseparator ist, wobei der rotierende Abscheider bevorzugt ein Tellerseparator ist. Tellerseparatoren sind auch deshalb bevorzugt, weil diese regelmäßig besonders energieeffizient betrieben werden können, so dass das erfindungsgemäße Verfahren gegenüber dem Stand der Technik energiesparend ist.

Von den vorstehend beschriebenen rotierenden Abscheidern ist nach Erkenntnissen der Erfinder der vorliegenden Erfindung der Einsatz eines Tellerseparators besonders bevorzugt. Vor allem beim Einsatz eines Tellerseparators in den Fluidleitungssystemen einer Brennstoffzelle mit Polymerelektrolytmembran kann das erfindungsgemäße Verfahren damit besonders vorteilhaft betrieben werden, insbesondere, weil Tellerseparatoren gut geeignet sind, einen kontinuierlichen Fluidstrom zu gewährleisten.

Der Einsatz eines Tellerseparators ist nach Einschätzung der Erfinder der vorliegenden Erfindung auch deshalb vorteilhaft, weil sich bei diesem das Maß der ungewollten Kondensation des Prozessstoffes aus der Gasphase durch konstruktive Maßnahmen besonders gut kontrollieren lässt. Hierbei haben die Erfinder erkannt, dass es besonders vorteilhaft ist, den Abstand zwischen den Tellern des Tellerseparators nicht zu groß zu wählen. Bevorzugt ist nämlich ein erfindungsgemäßes Verfahren, wobei der rotierende Abscheider ein Tellerseparator ist, wobei der Abstand zwischen den Tellern kleiner als 0,6 mm, bevorzugt kleiner als 0,3 mm, besonders bevorzugt kleiner als 0,2 mm, ist.

Darüber hinaus schlagen die Erfinder vor, zu einer Verringerung der ungewollten Kondensation Teller mit besonders glatten Oberflächen einzusetzen, was beispielsweise durch eine geeignete Oberflächenbehandlung im Herstellungsverfahren erreicht werden kann. Ohne an diese Theorie gebunden sein zu wollen, gehen die Erfinder der vorliegenden Erfindung davon aus, dass die besonders glatten Oberflächen in einem geringeren Maße als Kondensationskeime wirken und dadurch das Ausmaß der Kondensation verringert wird. Bevorzugt ist somit ein erfindungsgemäßes Verfahren, wobei der rotierende Abscheider ein Tellerseparator ist, wobei die Teller eine gemittelte Rautiefe Rz nach DIN EN ISO 1302:2002 von 25 µm oder weniger, bevorzugt 10 µm oder weniger, besonders bevorzugt 6,3 µm oder weniger, aufweisen

Als ganz besonders vorteilhaft hat es sich in den Augen der Erfinder der vorliegenden Erfindung erwiesen, abweichend von den üblichen Konstruktionen im Stand der Technik, die Teller aus einem den Prozessstoff abweisenden Material auszubilden oder die Oberfläche mit einem entsprechenden Material zu beschichten. Hierbei kann es sich im erfindungsgemäßen Falle von Wasser als Prozessstoff beispielsweise um ein hydrophobes Material handeln, beispielsweise Polytetrafluorethylen oder andere Perflourkarbonverbindungen. Ohne an diese Theorie gebunden sein zu wollen, gehen die Erfinder der vorliegenden Erfindung davon aus, dass entsprechende abweisende Oberflächen nur ein geringeres Maß an Kondensation des Prozessstoffes erlauben. Bevorzugt ist demnach ein erfindungsgemäßes Verfahren, wobei der rotierende Abscheider ein Tellerseparator ist, wobei zumindest einer der Teller, bevorzugt sämtliche Teller, besonders bevorzugt sämtliche Bauteile des Tellerseparators, die in Kontakt mit der Fluidströmung stehen, aus einem den Prozessstoff abweisenden Material bestehen oder mit einem den Prozessstoff abweisenden Material beschichtet sind, wobei der Prozessstoff auf dem den Prozessstoff abweisenden Material einen Kontaktwinkel im Bereich von 70° oder mehr, bevorzugt 80° oder mehr, besonders bevorzugt 90° oder mehr, ganz besonders bevorzugt 100° oder mehr, aufweist.

Darüber hinaus ist es in den Augen der Erfinder sinnvoll, zu vermeiden, dass es zu einer Abkühlung des Gases durch Expansion kommt, welche ein Kondensieren des Prozessstoffes aus der Gasphase befördern könnte. Die Erfinder der vorliegenden Erfindung schlagen entsprechend vor, den rotierenden Abscheider so auszulegen bzw. so zu betreiben, dass es nicht zu einer isenthalpen Druckminderung kommt, die über den Joule-Thomson-Effekt zu einer Abkühlung führen könnte. Bevorzugt ist folglich ein erfindungsgemäßes Verfahren, wobei der Unterschied im Gesamtdruck zwischen der gasförmigen Phase des mehrphasigen Fluidstroms vor dem rotierenden Abscheider und der aufbereiteten Gasphase des aufbereiteten Fluidstroms nach dem rotierenden Abscheider weniger als 1 %, bevorzugt weniger als 0,5 %, besonders bevorzugt weniger 0,1 %, beträgt.

Das erfindungsgemäße Verfahren kann vorteilhafterweise derart ausgeführt werden, dass die abgetrennte flüssige Phase und/oder die aufbereitete Gasphase aus dem Verfahren in die Arbeitsvorrichtung zurückgeführt werden kann, die der Bereitstellung des mehrphasigen Fluidstromes dient. Das entsprechende erfindungsgemäße Verfahren kann somit in einem Kreislauf, insbesondere einem geschlossenen Kreislauf, betrieben werden.

Hierbei ist es möglich, beispielsweise die abgetrennte flüssige Phase einer Arbeitsvorrichtung zuzuführen, in der der in Schritt a) bereitgestellte mehrphasige Fluidstrom erzeugt wird. Hierbei kann es sich beispielsweise um Dampfmaschinen oder ähnliche Vorrichtungen handeln. Bevorzugt ist insoweit ein erfindungsgemäßes Verfahren, wobei die in Schritt c) abgetrennte flüssige Phase zumindest teilweise einer Arbeitsvorrichtung zugeführt wird, in der der in Schritt a) bereitgestellte mehrphasige Fluidstrom erzeugt wird.

Das vorstehend beschriebene Vorgehen ist für den Einsatz beim Betrieb von Brennstoffzellen jedoch regelmäßig nicht anstrebenswert. In Brennstoffzellen sollte die entfernte flüssige Phase nämlich hingegen einem Austragssystem zugeführt werden, mit welchem die abgetrennte flüssige Phase aus dem Brennstoffzellensystem entfernt wird, um ein ungewünschtes Fluten der Brennstoffzelle zu verhindern. Beim Einsatz in einer Brennstoffzelle ist es jedoch, wie vorstehend erläutert, besonders vorteilhaft und sinnvoll, den in Schritt c) erzeugten aufbereiteten Fluidstrom in die Brennstoffzelle zurückzuführen. Bevorzugt ist folglich ein erfindungsgemäßes Verfahren, wobei der in Schritt c) erzeugte aufbereitete Fluidstrom zumindest teilweise einer Arbeitsvorrichtung zugeführt wird, in der der in Schritt a) bereitgestellte mehrphasige Fluidstrom erzeugt wird. Im Lichte der vorstehenden Ausführungen ist klar, dass ein solches erfindungsgemäßes Verfahren bevorzugt ist, wobei die Arbeitsvorrichtung eine Brennstoffzelle, insbesondere eine Polymerelektrolyt-Brennstoffzelle, ist.

Die Erfinder der vorliegenden Erfindung haben erkannt, dass es bei sehr tiefen und sehr hohen Temperaturen besonders herausfordernd sein kann, das erfindungsgemäße Verfahren zu betreiben, insbesondere in der erfindungsgemäßen Kombination mit einer Brennstoffzelle. Hierbei ist es besonders herausfordernd, in extremen Temperaturbereichen die Änderung des Stoffmengenanteils des Prozessstoffes in der gasförmigen Komponente erfindungsgemäß zu steuern. Entsprechend schlagen die Erfinder der vorliegenden Erfindung bestimmte Temperaturbereiche vor, in denen das erfindungsgemäße Verfahren besonders effektiv durchgeführt werden kann. Bevorzugt ist vor diesem Hintergrund ein erfindungsgemäßes Verfahren, wobei der mehrphasige Fluidstrom und/oder der aufbereitete Fluidstrom eine Temperatur im Bereich von -40 bis 120 °C, bevorzugt im Bereich von 0 bis 110 °C, aufweist.

Wie vorstehend erläutert, wird es als besonders vorteilhafter Aspekt der vorliegenden Erfindung angesehen, wenn die Änderung des Stoffmengenanteils des Prozessstoffes in der Gasphase über die Leistung des rotierenden Abscheiders gesteuert wird, in dem dieser bewusst einen gewissen Teil der flüssigen Phase passieren lässt. Hierfür hat es sich als besonders vorteilhaft erwiesen, den rotierenden Abscheider mit einem Elektromotor auszustatten, sodass dieser über die Leistung des Elektromotors gesteuert werden kann. Bevorzugt ist deshalb ein erfindungsgemäßes Verfahren, wobei der rotierende Abscheider durch einen Elektromotor angetrieben wird, wobei der Elektromotor bevorzugt in einer gegenüber dem Trägerstoff und/oder dem Prozessstoff permeationsdichten Kapsel verbaut ist, wobei die Förderleistung und/oder die Abscheideleistung des rotierenden Abscheiders bevorzugt über die Leistung des Elektromotors gesteuert werden kann.

Wie vorstehend erläutert, ist es eine vorteilhafte Ausgestaltung, den rotierenden Abscheider so zu betreiben, dass ein kleiner Teil der flüssigen Phase im aufbereiteten Fluidstrom verbleibt. Dies kann jedoch bei der weiteren Verwendung des Fluidstroms mit Problemen verbunden sein. Es ist beispielsweise möglich, dass es vor dem rotierenden Abscheider bereits zur Kondensation des Prozessstoffes kommt und sich dieser an den Wandungen des Fluidleitungssystem abscheidet. Solche Abscheidungen können durch den Fluidstrom mitgeschleppt werden, sodass es zu unerwarteten Schwankungen im Flüssigkeitseintrag in den rotierenden Abscheider kommen kann, welcher dann zu einem ungewollt hohen Anteil an flüssiger Phase in dem aufbereiteten Fluidstrom führen könnte. Um dies zu verhindern, können einfachere, nicht rotierende Vorabscheider vorgesehen werden, die den Eintrag solcher Kondensate in den rotierenden Abscheider unterbinden. Bevorzugt ist entsprechend ein erfindungsgemäßes Verfahren, wobei der mehrphasige Fluidstrom vor dem Einbringen in den kontinuierlich betreibbaren rotierenden Abscheider durch einen, bevorzugt nicht rotierenden, Vorabscheider geführt wird.

Je nach Ausgestaltung des Fluidleitungssystems kann es auch hinter dem rotierenden Abscheider zu einer weiteren Kondensation kommen. Ebenfalls kann nicht ausgeschlossen werden, dass der Gehalt an flüssiger Phase nach dem Durchlaufen des rotierenden Abscheiders für bestimmte Anwendungen noch zu hoch ist. In diesen Fällen bietet sich der Einsatz eines Nachabscheiders an, welcher vorteilhafterweise unmittelbar vor dem Eingang der Arbeitsvorrichtung angeordnet werden kann, um im Zweifelsfall den Gehalt an flüssiger Phase auf das gewünschte Ausmaß zu reduzieren. Bevorzugt ist somit ein erfindungsgemäßes Verfahren, wobei der aufbereitete Fluidstrom durch einen, bevorzugt nicht rotierenden, Nachabscheider geführt wird.

Die Erfinder der vorliegenden Erfindung konnten ausgehend von den gesammelten Erkenntnissen und der grundlegenden Erfindungsidee spezifische Betriebsparameter identifizieren, mit denen das erfindungsgemäße Verfahren besonders vorteilhaft betrieben werden kann.

Bevorzugt ist nämlich ein erfindungsgemäßes Verfahren, wobei der rotierende Abscheider in Bezug auf Flüssigkeitspartikel mit einem Durchmesser von weniger als 1 µm einen Abscheidegrad von 70 % oder mehr, bevorzugt 80 % oder mehr, besonders bevorzugt von 90 % oder mehr, aufweist.

Bevorzugt ist auch ein erfindungsgemäßes Verfahren, wobei der mehrphasige Fluidstrom ein Aerosol ist, wobei die flüssige Phase im mehrphasigen Fluidstrom vorzugsweise als Flüssigkeitspartikel mit einem Durchmesser d50 von weniger als 10 µm, bevorzugt weniger als 5 µm, besonders bevorzugt weniger als 2 µm, vorliegt.

Aus Sicht der Erfinder sind solche erfindungsgemäßen Verfahren besonders vorteilhaft, in denen die gasförmige Phase als Trägerstoff ein Mehrstoffsystem umfasst, wobei es mit Blick auf die Effizienz der Verfahrensführung besonders vorteilhaft ist, wenn sich der verwendete Trägerstoff in der flüssigen Phase des mehrphasigen Fluidstroms möglichst wenig löst. Bevorzugt ist also ein erfindungsgemäßes Verfahren, wobei die gasförmige Phase als Trägerstoff zwei oder mehr unterschiedliche Stoffe umfasst. Bevorzugt ist ebenfalls ein erfindungsgemäßes Verfahren, wobei der kombinierte Massenanteil sämtlicher Trägerstoffe in der flüssigen Phase des mehrphasigen Fluidstroms weniger als 5 %, bevorzugt weniger als 3 %, besonders bevorzugt weniger als 1 %, beträgt, bezogen auf die Masse der flüssigen Phase des mehrphasigen Fluidstroms.

Die Erfinder der vorliegenden Erfindung konnten zudem besonders geeignete Trägerstoffe identifizieren. Bevorzugt ist nämlich ein erfindungsgemäßes Verfahren, wobei der Trägerstoff ausgewählt ist aus der Gruppe bestehend aus Helium, Neon, Argon, Stickstoff, Sauerstoff, Wasserstoff und Mischungen dieser Stoffe, wobei der Trägerstoff bevorzugt ausgewählt ist aus der Gruppe bestehend aus Stickstoff, Wasserstoff und Mischungen dieser Stoffe.

Für den Einsatz des erfindungsgemäßen Verfahrens beim Betrieb von Brennstoffzellen konnten die Erfinder darüber hinaus ein besonders geeignetes Gemisch für den Trägerstoff identifizieren. Bevorzugt ist in diesem Fall ein erfindungsgemäßes Verfahren, wobei der Trägerstoff in der gasförmigen Phase des mehrphasigen Fluidstroms Wasserstoff mit einem Massenanteil von 30 bis 100 %, bevorzugt einem Massenanteil von 50 bis 95 %, und Stickstoff mit einem Massenanteil von 0 bis 70%, bevorzugt einem Massenanteil von 5 bis 50%, umfasst, bezogen auf die Masse der gasförmigen Phase.

Im Lichte der vorstehenden Ausführungen ist für den Fachmann ersichtlich, dass das erfindungsgemäße Verfahren erfindungsgemäß für den Einsatz in Brennstoffzellen, insbesondere Polymerelektrolyt-Brennstoffzellen, und insoweit vor allem in deren anodenseitigen Fluidleitungssystem bzw. Fluidmanagementsystem, vorgesehen ist. Bei diesem Einsatzzweck ist der relevante Prozessstoff, dessen Konzentration spezifisch gesteuert werden sollte, Wasser. Erfindungsgemäß ist in der Konsequenz ein erfindungsgemäßes Verfahren, wobei der Prozessstoff Wasser ist. Besonders bevorzugt ist in diesem Zusammenhang ebenso ein erfindungsgemäßes Verfahren, wobei der mehrphasige Fluidstrom in Schritt a) durch eine Arbeitsvorrichtung erzeugt wird, wobei die Arbeitsvorrichtung bevorzugt eine Brennstoffzelle, insbesondere eine Polymerelektrolytbrennstoffzelle, ist.

Für den Prozessstoff Wasser und den Betrieb einer Polymerelektrolyt-Brennstoffzelle konnten die Erfinder einen besonders geeigneten Bereich der absoluten Stoffmengenanteile im aufbereiteten Gasstrom identifizieren. Bevorzugt ist nämlich ein erfindungsgemäßes Verfahren, wobei der Stoffmengenanteil des Prozessstoffes in der aufbereiteten Gasphase im Bereich von 10 bis 40 %, bevorzugt 13 bis 35 %, besonders bevorzugt 16 bis 30 %, beträgt.

Der Fachmann erkennt im Lichte der vorstehenden Ausführungen, dass die Erfindung auch einen rotierenden Abscheider betrifft. Die Erfindung betrifft somit auch einen rotierenden Abscheider für den Einsatz in einem erfindungsgemäßen Verfahren, wobei der rotierende Abscheider kontinuierlich betreibbar ist, wobei der rotierende Abscheider dazu eingerichtet ist, die einen Prozessstoff umfassende flüssige Phase eines mehrphasigen Fluidstroms von der einen Trägerstoff und den Prozessstoff umfassenden gasförmigen Phase zumindest teilweise abzutrennen, so dass die erhaltene aufbereitete Gasphase den Trägerstoff und den Prozessstoff umfasst und sodass der Stoffmengenanteil des Prozessstoffes in der aufbereiteten Gasphase 50 % oder mehr des Stoffmengenanteils des Prozessstoffes in der gasförmigen Phase des mehrphasigen Fluidstroms beträgt.

Der erfindungsgemäße rotierende Abscheider ist besonders bevorzugt, weil mit ihm das erfindungsgemäße Verfahren besonders effizient umgesetzt werden kann. Nachfolgend werden bevorzugte Ausgestaltungen des erfindungsgemäßen rotierenden Abscheiders angegeben, die der Verwirklichung von bevorzugten erfindungsgemäßen Verfahren dienen und aus diesen Gründen als besonders vorteilhaft angesehen werden können.

Bevorzugt ist nämlich ein erfindungsgemäßer rotierender Abscheider, wobei der rotierende Abscheider eine Strömungsmaschine, ein rotierender Filter, ein rotierender Kanalabscheider oder ein Tellerseparator ist, wobei der rotierende Abscheider bevorzugt ein Tellerseparator ist.

Bevorzugt ist auch ein erfindungsgemäßer rotierender Abscheider, wobei der rotierende Abscheider eine Heizvorrichtung zum Temperieren der Innenwände der Arbeitskammer umfasst.

Bevorzugt ist ebenfalls ein erfindungsgemäßer rotierender Abscheider, wobei der rotierende Abscheider ein Tellerseparator ist, wobei der Abstand zwischen den Tellern kleiner als 0,6 mm, bevorzugt kleiner als 0,3 mm, besonders bevorzugt kleiner als 0,2 mm, ist.

Bevorzugt ist zudem ein erfindungsgemäßer rotierender Abscheider, wobei der rotierende Abscheider ein Tellerseparator ist, wobei die Teller eine gemittelte Rautiefe Rz von 25 µm oder weniger, bevorzugt 10 µm oder weniger, besonders bevorzugt 6,3 µm oder weniger, aufweisen
Bevorzugt ist darüber hinaus ein erfindungsgemäßer rotierender Abscheider, wobei der rotierende Abscheider ein Tellerseparator ist, wobei zumindest einer der Teller, bevorzugt sämtliche Teller, besonders bevorzugt sämtliche Bauteile des Tellerseparators, die in Kontakt mit der Fluidströmung stehen, aus einem den Prozessstoff abweisenden Material bestehen oder mit einem den Prozessstoff abweisenden Material beschichtet sind, wobei der Prozessstoff auf dem den Prozessstoff abweisenden Material einen Kontaktwinkel im Bereich von 70° oder mehr, bevorzugt 80° oder mehr, besonders bevorzugt 90° oder mehr, ganz besonders bevorzugt 100° oder mehr, aufweist.

Bevorzugt ist gleichfalls ein erfindungsgemäßer rotierender Abscheider, umfassend einen nicht rotierenden Vorabscheider und/oder einen nicht rotierenden Nachabscheider.

Bevorzugt ist weiterhin ein erfindungsgemäßer rotierender Abscheider, wobei der rotierende Abscheider in Bezug auf Flüssigkeitspartikel mit einem Durchmesser von weniger als 1 µm einen Abscheidegrad von 70 % oder mehr, bevorzugt 80 % oder mehr, besonders bevorzugt von 90 % oder mehr, aufweist.

Offenbart wird im Zusammenhang mit der Erfindung auch die Verwendung eines derartigen rotierenden Abscheiders zur kontinuierlichen Aufbereitung von mehrphasigen Fluidströmen beim Betrieb von Brennstoffzellen, insbesondere Polymerelektrolytbrennstoffzellen, zur Verlängerung der Lebensdauer einer Brennstoffzelle beim Betrieb mit einer Leistung, die weniger als 20 %, bevorzugt weniger als 10 %, der Maximalleistung beträgt.

Die Erfindung betrifft abschließend auch ein Brennstoffzellensystem, insbesondere Polymerelektrolytbrennstoffzellensystem, umfassend ein Fluidleitungssystem zur Fluidversorgung zumindest einer Elektrode einer Brennstoffzelle, insbesondere der Anode, wobei in zumindest einer Fluidleitung ein derartiger rotierender Abscheider zur kontinuierlichen Aufbereitung von mehrphasigen Fluidströmen vorgesehen ist.

Ein entsprechendes erfindungsgemäßes Brennstoffzellensystem ist vorteilhaft, da in diesem das erfindungsgemäße Verfahren durchgeführt werden kann und die Brennstoffzelle auch bei geringer Last über längere Zeiträume betrieben werden kann, wobei ein Austrocknen der Elektrolytmembran verhindert wird. Zudem ist es durch den rotierenden Abscheider vorteilhafterweise möglich, die Brennstoffzelle auch bei niedrigen Lasten und entsprechend niedrigen Leistungen ausreichend mit dem rezyklierten Brennstoff zu versorgen. Hierdurch wird vorteilhafterweise eine hohe Betriebssicherheit und eine lange Lebensdauer erreicht.

Nachfolgend werden die Erfindung und bevorzugte Ausführungsformen der Erfindung unter Bezugnahme auf die beiliegende Figur näher erläutert und beschrieben. In der Figur zeigt dabei:

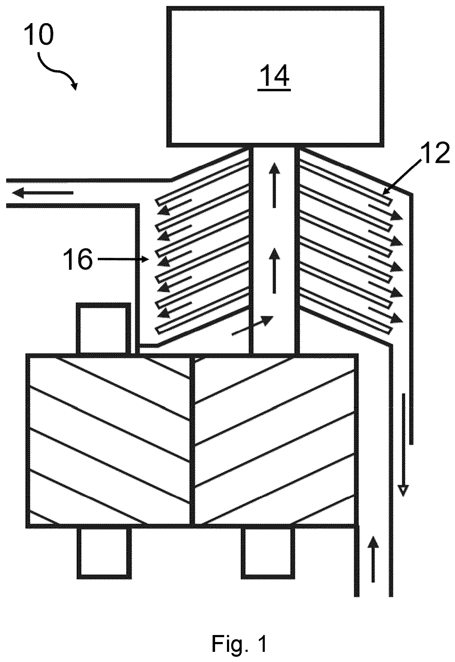

- Fig. 1: eine schematische Darstellung eines erfindungsgemäßen rotierenden Abscheiders in einer besonders bevorzugten Ausführungsform, mit dem das erfindungsgemäße Verfahren in bevorzugten Ausgestaltungen durchgeführt werden kann.

Fig. 1 zeigt eine schematische Darstellung eines erfindungsgemäßen rotierenden Abscheiders in einer besonders bevorzugten Ausführungsform.

Der gezeigte rotierende Abscheider 10 ist für den Einsatz in einem erfindungsgemäßen Verfahren geeignet und bestimmt. bei dem rotierenden Abscheider 10 handelt es sich um einen kontinuierlich betreibbaren Tellerseparator.

Der rotierende Abscheider 10 gemäß Fig. 1 ist in dem anodenseitigen Fluidleitungssystem eines Polymerelektrolytbrennstoffzellensystems angeordnet (nicht gezeigt) und dient dabei der kontinuierlichen Aufbereitung von mehrphasigen Fluidströmen, insbesondere umfassend Wasserstoff und Wasser.

In dem in Fig. 1 gezeigten Beispiel ist der rotierend Abscheider 10 dazu eingerichtet, die vor allem Wasser umfassende flüssige Phase eines mehrphasigen Fluidstroms zumindest teilweise von der Wasserstoff, Wasser und ggf. Stickstoff umfassenden Gasphase abzutrennen. Dies kann mit dem erfindungsgemäßen rotierenden Abscheider 10 vorteilhafterweise so erfolgen, dass die erhaltene aufbereitete Gasphase Wasserstoff und Wasser umfasst und der Stoffmengenanteil des Wassers in der aufbereiteten Gasphase 50 % oder mehr des Stoffmengenanteils des Wassers in der gasförmigen Phase des mehrphasigen Fluidstroms, d.h. vor der Aufbereitung, beträgt.

Der mehrphasige Fluidstrom tritt von unten in den rotierenden Abscheider 10 ein, was durch den ausgefüllten Pfeil angedeutet wird. Hierbei sorgt eine unterhalb der Arbeitskammer 16 angeordnete Fördereinrichtung für die Fluidförderung durch den rotierenden Abscheider 10. Der rotierende Abscheider 10 umfasst ein Tellerpaket aus mehreren Tellern 12, wobei das Tellerpaket über einen Elektromotor 14 rotatorisch angetrieben wird. Der Elektromotor 14 erlaubt die Einstellung der Abscheideleistung. Die Abscheidung erfolgt durch das Tellerpaket, wobei die abgeschiedene flüssige Phase in dem gezeigten Beispiel am rechten Rand abgeführt wird, was durch einen nicht-ausgefüllten Pfeil angedeutet wird.

Die aufbereitete Gasphase, die neben dem Trägerstoff Wasserstoff auch gasförmiges Wasser umfasst, wird in der schematischen Darstellung hingegen nach links weggeführt und zur Brennstoffzelle rezykliert.

Der rotierende Abscheider 10 gemäß Fig. 1 umfasst eine Heizvorrichtung (nicht gezeigt) zum Temperieren der Innenwände der Arbeitskammer 16 und weist zwischen den Tellern 12 einen Abstand von 0,25 mm auf. Die gemittelte Rautiefe der Oberfläche der Teller 12 beträgt 6,3 µm. Die Teller 12 des rotierenden Abscheiders 10 sind aus Polytetrafluorethylen ausgebildet und die Innenwände der Arbeitskammer 16 sind mit Polytetrafluorethylen beschichtet.

Der beispielhafte rotierende Abscheider 10 gemäß Fig. 1 weist in Bezug auf Flüssigkeitspartikel mit einem Durchmesser von weniger als 1 µm einen Abscheidegrad von 70 % oder mehr auf.

### Bezugszeichen

- 10: Rotierender Abscheider
- 12: Teller
- 14: Elektromotor
- 16: Arbeitskammer

## Patentansprüche

1. Verfahren zur kontinuierlichen Aufbereitung von mehrphasigen Fluidströmen beim Betrieb von Brennstoffzellen, umfassend die Schritte:
a) Bereitstellen eines mehrphasigen Fluidstroms umfassend eine gasförmige Phase und eine flüssige Phase, wobei die gasförmige Phase einen Trägerstoff und einen Prozessstoff umfasst, wobei die flüssige Phase den Prozessstoff umfasst, wobei es sich bei dem Prozessstoff um Wasser handelt,
b) Einbringen des mehrphasigen Fluidstroms in einen kontinuierlich betreibbaren rotierenden Abscheider (10),
c) Zumindest teilweises Abtrennen der flüssigen Phase aus dem mehrphasigen Fluidstrom mittels des rotierenden Abscheiders (10) zum Erzeugen eines aufbereiteten Fluidstroms umfassend eine aufbereitete Gasphase, wobei 98 Gew.-% oder mehr der flüssigen Phase abgetrennt werden,
wobei die aufbereitete Gasphase den Trägerstoff und den Prozessstoff umfasst, wobei der Stoffmengenanteil des Prozessstoffes in der aufbereiteten Gasphase 50 % oder mehr des Stoffmengenanteils des Prozessstoffes in der gasförmigen Phase des mehrphasigen Fluidstroms beträgt.

2. Verfahren nach Anspruch 1, wobei das Abtrennen in Schritt c) so erfolgt, dass der aufbereitete Fluidstrom die flüssige Phase in einem Massenanteil von 0,05 bis 2 %, bevorzugt 0,1 bis 1 %, besonders bevorzugt 0,2 bis 0,5 % umfasst, bezogen auf die Masse des aufbereiteten Fluidstroms.

3. Verfahren nach einem der Ansprüche 1 oder 2, wobei der rotierende Abscheider (10) an den Innenwänden der Arbeitskammer (16) eine Temperatur von 60 °C oder mehr, bevorzugt 70 °C oder mehr, besonders bevorzugt 80 °C oder mehr aufweist.

4. Verfahren nach einem der Ansprüche 1 bis 3, wobei der rotierende Abscheider (10) eine Strömungsmaschine, ein rotierender Filter, ein rotierender Kanalabscheider oder ein Tellerseparator ist, wobei der rotierende Abscheider (10) bevorzugt ein Tellerseparator ist.

5. Verfahren nach Anspruch 4, wobei der rotierende Abscheider (10) ein Tellerseparator ist, wobei die Teller (12) eine gemittelte Rautiefe Rz von 25 µm oder weniger, bevorzugt 10 µm oder weniger, besonders bevorzugt 6,3 µm oder weniger, aufweisen.

6. Verfahren nach einem der Ansprüche 4 oder 5, wobei der rotierende Abscheider (10) ein Tellerseparator ist, wobei der Abstand zwischen den Tellern (12) kleiner als 0,6 mm, bevorzugt kleiner als 0,3 mm, besonders bevorzugt kleiner als 0,2 mm, ist.

7. Verfahren nach einem der Ansprüche 4 bis 6, wobei der rotierende Abscheider (10) ein Tellerseparator ist, wobei zumindest einer der Teller (12), bevorzugt sämtliche Teller (12), besonders bevorzugt sämtliche Bauteile des Tellerseparators, die in Kontakt mit der Fluidströmung stehen, aus einem den Prozessstoff abweisenden Material bestehen oder mit einem den Prozessstoff abweisenden Material beschichtet sind, wobei der Prozessstoff auf dem den Prozessstoff abweisenden Material einen Kontaktwinkel von 90° oder mehr, bevorzugt 100° oder mehr, aufweist.

8. Verfahren nach einem der Ansprüche 1 bis 7, wobei der rotierende Abscheider (10) durch einen Elektromotor (14) angetrieben wird, wobei der Elektromotor (14) bevorzugt in einer gegenüber dem Trägerstoff und/oder dem Prozessstoff permeationsdichten Kapsel verbaut ist, wobei die Förderleistung und/oder die Abscheideleistung des rotierenden Abscheiders (10) bevorzugt über die Leistung des Elektromotors (14) gesteuert werden kann.

9. Rotierender Abscheider (10) für den Einsatz in einem Verfahren nach einem der Ansprüche 5 bis 8, wobei der rotierende Abscheider (10) kontinuierlich betreibbar ist, wobei der rotierende Abscheider (10) dazu eingerichtet ist, die einen Prozessstoff umfassende flüssige Phase eines mehrphasigen Fluidstroms von der einen Trägerstoff und den Prozessstoff umfassenden gasförmigen Phase zumindest teilweise abzutrennen, so dass die erhaltene aufbereitete Gasphase den Trägerstoff und den Prozessstoff umfasst und sodass der Stoffmengenanteil des Prozessstoffes in der aufbereiteten Gasphase 50 % oder mehr des Stoffmengenanteils des Prozessstoffes in der gasförmigen Phase des mehrphasigen Fluidstroms beträgt, wobei der rotierende Abscheider (10) ein Tellerseparator ist, und wobei die Teller (12) eine gemittelte Rautiefe Rz von 25 µm oder weniger aufweisen.

10. Brennstoffzellensystem, insbesondere Polymerelektrolytbrennstoffzellensystem, umfassend ein Fluidleitungssystem zur Fluidversorgung zumindest einer Elektrode einer Brennstoffzelle, insbesondere der Anode, wobei in zumindest einer Fluidleitung ein rotierender Abscheider nach Anspruch 9 zur kontinuierlichen Aufbereitung von mehrphasigen Fluidströmen vorgesehen ist.

## Claims

1. Method for continuously treating multiphase fluid flows during operation of fuel cells, comprising the steps of:
a) providing a multiphase fluid flow comprising a gas phase and a liquid phase, wherein the gas phase comprises a carrier substance and a process substance, wherein the liquid phase comprises the process substance, wherein the process substance is water,
b) introducing the multiphase fluid flow into a continuously operable rotating separator (10),
c) at least partially separating the liquid phase from the multiphase fluid flow by means of the rotating separator (10) to produce a treated fluid flow comprising a treated gas phase, wherein 98 wt.% or more of the liquid phase are separated,
wherein the treated gas phase comprises the carrier substance and the process substance, wherein the molar fraction of the process substance in the treated gas phase is 50 % or more of the molar fraction of the process substance in the gas phase of the multiphase fluid flow.

2. Method according to claim 1, wherein the separation in step c) is carried out in such a way that the treated fluid stream comprises the liquid phase in a mass fraction of 0.05 to 2 %, preferably 0.1 to 1 %, particularly preferably 0.2 to 0.5 %, relative to the mass of the treated fluid stream.

3. Method according to any of claims 1 or 2, wherein the rotating separator (10) at the inner walls of the working chamber (16) has a temperature of 60 °C or more, preferably 70 °C or more, particularly preferably 80 °C or more.

4. Method according to any of claims 1 to 3, wherein the rotating separator (10) is a turbo machine, a rotating filter, a rotating channel separator or a disk separator, wherein the rotating separator (10) is preferably a disk separator.

5. Method according to claim 4, wherein the rotating separator (10) is a disk separator, wherein the disks (12) have an average roughness depth Rz of 25 µm or less, preferably 10 µm or less, particularly preferably 6.3 µm or less.

6. Method according to any of claims 4 or 5, wherein the rotating separator (10) is a disk separator, wherein the distance between the disks (12) is less than 0.6 mm, preferably less than 0.3 mm, particularly preferably less than 0.2 mm.

7. Method according to any of claims 4 to 6, wherein the rotating separator (10) is a disk separator, wherein at least one of the disks (12), preferably all disks (12), particularly preferably all components of the disk separator which are in contact with the fluid flow, consist of a material which repels the process substance or are coated with a material which repels the process substance, wherein the process substance has a contact angle on the material which repels the process material of 90° or more, preferably 100° or more.

8. Method according to any of claims 1 to 7, wherein the rotating separator (10) is driven by an electric motor (14), wherein the electric motor (14) is preferably installed in a capsule that is impermeable to the carrier substance and/or the process substance, wherein the delivery capacity and/or the separation capacity of the rotating separator (10) can preferably be controlled by the power of the electric motor (14).

9. Rotating separator (10) for use in a method according to any of claims 5 to 8, wherein the rotating separator (10) can be operated continuously, wherein the rotating separator (10) is configured to at least partially separate the liquid phase of a multiphase fluid flow comprising a process substance from the gas phase comprising a carrier substance and the process substance, so that the obtained treated gas phase comprises the carrier substance and the process substance, and so that the molar fraction of the process substance in the treated gas phase is 50 % or more of the molar fraction of the process substance in the gas phase of the multiphase fluid flow, wherein the rotating separator (10) is a disk separator, and wherein the disks (12) have an average roughness depth Rz of 25 µm or less.

10. Fuel cell system, in particular a polymer electrolyte fuel cell system, comprising a fluid line system for the fluid supply for at least one electrode of a fuel cell, in particular the anode, wherein a rotating separator according to claim 9 is provided in at least one fluid line for continuously treating multiphase fluid flows.

## Revendications

1. Procédé destiné au traitement en continu de flux de fluide polyphasiques lors du fonctionnement des piles à combustible, comprenant les étapes :
a) fourniture d'un flux de fluide polyphasique comprenant une phase gazeuse et une phase liquide, la phase gazeuse comprenant un matériau support et un agent de traitement, la phase fluide comprenant l'agent de traitement, l'agent de traitement étant de l'eau,
b) introduction du flux de fluide polyphasique dans un séparateur rotatif (10) pouvant fonctionner en continu,
c) séparation au moins partielle de la phase liquide du courant de fluide polyphasique au moyen du séparateur rotatif (10) pour produire un courant de fluide traité comprenant une phase gazeuse traitée, 98 % en poids ou plus de la phase liquide étant séparés,
la phase gazeuse traitée comprenant le matériau de support et l'agent de traitement, la proportion de quantité d'agent de traitement dans la phase gazeuse traitée étant de 50 % ou plus de la proportion de quantité d'agent de traitement dans la phase gazeuse du flux de fluide polyphasique.

2. Procédé selon la revendication 1, la séparation prévue à l'étape c) s'effectuant de telle sorte que le flux de fluide traité comprend la phase liquide dans une proportion massique de 0,05 à 2 %, de préférence 0,1 à 1 %, de préférence particulière 0,2 à 0,5 % par rapport à la masse du flux de liquide traité.

3. Procédé selon l'une quelconque des revendications 1 ou 2, le séparateur rotatif (10) présentant sur les parois intérieures de la chambre de travail (16) une température de 60 °C ou plus, de préférence 70 °C ou plus, de préférence particulière 80 °C ou plus.

4. Procédé selon l'une quelconque des revendications 1 à 3, le séparateur rotatif (10) étant une turbomachine, un filtre rotatif, un séparateur rotatif canal ou un séparateur à disques, le séparateur rotatif (10) étant de préférence un séparateur à disques.

5. Procédé selon la revendication 4, le séparateur rotatif (10) étant un séparateur à disques, les disques (12) présentant une profondeur de rugosité moyenne Rz de 25 µm ou moins, de préférence 10 µm ou moins, de préférence particulière 6,3 µm ou moins.

6. Procédé selon l'une quelconque des revendications 4 ou 5, le séparateur rotatif (10) étant un séparateur à disques, la distance entre les disques (12) étant inférieure à 0,6 mm, de préférence inférieure à 0,3 mm, de préférence particulière inférieure à 0,2 mm.

7. Procédé selon l'une quelconque des revendications 4 à 6, le séparateur rotatif (10) étant un séparateur à disques, au moins un des disques (12), de préférence tous les disques (12), de préférence particulière toutes les pièces du séparateur à disques qui sont en contact avec le courant de fluide, étant à base d'un matériau étanche à l'agent de traitement ou étant revêtus d'un matériau étanche à l'agent de traitement, l'agent de traitement présentant un angle de contact sur le matériau étanche à l'agent de traitement de 90 ° ou plus, de préférence 100 ° ou plus.

8. Procédé selon l'une quelconque des revendications 1 à 7, le séparateur rotatif (10) étant entraîné par un moteur électrique (14), ledit moteur électrique (14) étant de préférence monté dans une capsule étanche à la perméation par rapport au matériau porteur et/ou à l'agent de traitement, la capacité de transport et/ou la puissance de séparation du séparateur rotatif (10) pouvant être commandées par le bais de la puissance du moteur électrique (14).

9. Séparateur rotatif (10) pour une utilisation dans un procédé selon l'une quelconque des revendications 5 à 8, le séparateur rotatif (10) pouvant fonctionner en continu, ledit séparateur rotatif (10) étant destiné à séparer au moins partiellement la phase liquide d'un flux de fluide polyphasique comprenant un agent de traitement de la phase gazeuse comprenant un matériau support et l'agent de traitement, de sorte que la phase gazeuse traitée obtenue comprend le matériau support et l'agent de traitement, et de sorte que la proportion de quantité de l'agent de traitement dans la phase gazeuse traitée est de 50 % ou plus de la proportion de quantité de l'agent de traitement dans la phase gazeuse du flux de fluide polyphasique, le séparateur rotatif (10) étant un séparateur à disques, et les disques (12) présentant une profondeur de rugosité moyenne Rz de 25 µm ou moins.

10. Système de piles à combustible, notamment système de piles à combustible à électrolyte polymère, comprenant un système de conduite de fluide pour l'alimentation en fluide d'au moins une électrode d'une pile à combustible, notamment de l'anode, un séparateur rotatif selon la revendication 9 étant prévu dans au moins une conduite de fluide pour le traitement continu de flux de fluide polyphasiques.
